# EUROPEAN PATENT SPECIFICATION

(11) **EP 3 753 063 B1**
(45) Date of publication and mention of the grant of the patent: **08.04.2026**
(21) Application number: 19714883.6
(22) Date of filing: 13.02.2019
(51) Int. Cl.: H01M 8/18, H01M 8/22, H01M 8/2455, H01M 8/04746

(54) **METHOD FOR STORAGE OF ENERGY USING A PH GRADIENT SYSTEM AND SYSTEM THERE FOR**
VERFAHREN ZUR SPEICHERUNG VON ENERGIE UNTER VERWENDUNG EINES PH-GRADIENTENSYSTEMS UND SYSTEM DAFÜR
PROCÉDÉ DE STOCKAGE D'ÉNERGIE À L'AIDE D'UN SYSTÈME À GRADIENT DE PH ET SYSTÈME ASSOCIÉ

(30) Priority: 14.02.2018 NL 2020439
(43) Date of publication of application: 23.12.2020
(73) Proprietor: AquaBattery B.V., 2404 BP Alphen aan de Rijn (NL)
(72) Inventor: SAAKES, Machiel, 8911 MA LEEUWARDEN (NL); HAMELERS, Hubertus Victor Marie, 8911 MA LEEUWARDEN (NL)
(74) Representative: Arnold & Siedsma
(86) International application number: PCT/NL2019/050094
(87) International publication number: WO 2019/160411

(56) References cited:
- WO-A1-2011/149624
- WO-A1-2015/026393
- WO-A1-2016/168360
- US-A1- 2006 183 016

## Description

The present invention relates to a method for storage of energy using a pH gradient battery and/ or fuel cell involving a charging step and a discharging step. The method uses a cell for storage of energy.

Methods or systems for energy storage are known from practice. These methods or systems use cells for storage of energy. Such cells are for example used in (bio-)electrochemical cells. Regardless of the system in which cells are used, the cell should be configured to be efficient as it is mainly used for temporarily storage of energy. This storage of energy becomes important in a time period of an energy surplus and to enable providing additional energy in a time period of a high energy demand. The cell is a battery, which will provide storage of energy within the system, and/or a fuel cell, which will provide energy to be stored or used outside the system.

WO2016168360A1 discloses that parasitic reactions, such as production of hydrogen and oxidation by oxygen, can occur under the operating conditions of flow batteries and other electrochemical systems. Such parasitic reactions can undesirably impact operating performance by altering the pH and/or state of charge of one or both electrolyte solutions in a flow battery. Electrochemical balancing cells can allow rebalancing of electrolyte solutions to take place.

WO2011149624A1 discloses secondary batteries, such as flow batteries, and compositions for use in such batteries are provided. The secondary battery systems according to WO2011149624A1 are designed for charge and discharge with very small capacity loss per cycle over a long period of time.

A disadvantage of the known cells for energy storage however is the poor efficiency due to the complexity of the system with electrodes and membranes used in such cells. Another disadvantage is the use of rare elements and/or poisonous materials that are not sustainable. Therefore, these conventional devices and systems do not provide an effective energy storage system and/or method that is sustainable and could be implemented on a wide scale, for example including house holds.

The invention is aimed at obviating or at least increase the abovementioned efficiency of the cell and/or to come to a sustainable electrical energy storage and electrical energy generation system.

This objective is achieved with the method according to claim 1 and a system according to independent claim 8.

It will be understood by the skilled person that the system pH gradient battery stores the energy within the cell and that it can also be a flow cell or a container, but is not limited to these. Furthermore, it will be understood by the skilled person that the cell can be a fuel cell, where the energy can be stored outside the fuel cell.

According to the method of the invention, the cell, that comprises at least two compartments and electrodes, is provided with a solvent. The chosen solvent needs to be compatible with the membrane and used chemicals. Solvents which are possible to use are for example: acetonitrile, butanol, ethanol, ethyl acetate, methanol, propanol, tetrahydrofuran, water or mixtures thereof.

An electrolyte is loaded in at least one of the at least two compartments, and when loaded, the electrolyte produces an electrically conducting media as it contains a species of which the oxidation state can be increased and/or decreased. According to the invention, the electrolyte could be used as redox couple and formed in situ depending on the choice of the redox couple. In order to do so, the redox couple has to be compatible with the solvent.

A charging step of the pH gradient system involves a redox couple. The reduction reaction step is performed at the first electrode and the oxidation reaction step is performed at the second electrode. At the same time as the redox reaction is performed, water is dissociated at the bipolar membrane into protons and hydroxyl ions.

A discharging step of the pH gradient system involves a redox couple. The oxidation reaction step is performed at the first electrode and the reduction reaction step is performed at the second electrode. At the same time as the redox reaction is performed, water is formed at the bipolar membrane from the reaction of protons and hydroxyl ions.

The redox couple can be a solid, a liquid and/or a gas. In one of the preferred embodiments the solid, liquid and/or gas is dissolved in the solvent.

According to the invention the redox couple at the first electrode can be decreased in oxidation state or increased in oxidation state to obtain an electrical potential difference between the first and second electrode. For example, the redox couple at the first electrode acts as anion donor and/or acceptor. The anion participates in the redox reaction. This allows removing the anion exchange membrane from the cell. The advantage of removing the anion exchange membrane from the cell is the reduction of the loss of co-ions in the system. This has a positive effect on the efficiency and reduces the cost of the pH gradient system.

A further advantage of the formation of a redox couple in situ is the reduction of the amount of membranes used in the pH gradient system. This has a positive effect on the efficiency and reduces the cost of the pH gradient system.

The method as described above has the advantage that fewer membranes are used as compared to conventional cells. This has a positive effect towards the efficiency of storage of energy using a pH gradient system and thus the cell. This could be easily explained as co-ion transport is the limiting factor and loss of Coulomb efficiency via co-ion transport occurs.

An additional advantage is the reduction of maintenance, and therefore labour, as fewer parts are present in the cell. The effect of this advantage is the reduction in costs. Furthermore, due to the reduction in handlings the safety of an operator would increase as fewer handlings with chemicals have to be performed, this is an additional effect.

An advantage of the redox couple at the first electrode where it can be decreased in oxidation state or increased in oxidation state to obtain an electrical potential difference between the first and second electrode,is the loss of the anion exchange membrane (AEM). Therefore the pH gradient system obtains a better efficiency as the leaking of ions is reduced. A further effect is the reduction in costs.

Yet a further advantage is the possibility to stack the cells compacter. This has the effect that less space is needed for the same amount of cells or more cells can be stacked in the same volume. This enhances the overall efficiency of the charging and discharging steps.

Yet an even further advantage is that the electrolyte, when performing the reaction(s),is compatible with the membrane and electrode at the same time.

The redox couple according to the present invention comprises one or two chosen from the group 3I⁻/I₃⁻, 3Br⁻/Br₃⁻, wherein the redox couple at the first electrode and second electrode are the same.

The advantage of these redox couples is that these are stable in the proposed solvents.

The advantage of these anions is that these can participate in a redox reaction and are stable in the proposed solvents. The effect is that these anions can participate in the redox reaction and act as anion donor and/or acceptor. It is possible to remove the anion exchange membrane and reduce the loss of co-ion transport at the side of the first electrode. Therefore, the efficiency of the system will increase, less maintenance needs to be performed and costs will be reduced.

According to the method of the invention the anion is bromide or iodide.

The method making use of bromide and/or iodide has the same advantages and effects as described previously. A further advantage is that these anions will be stable at the reaction conditions applied in the cell. This provides a relatively robust method.

According to an embodiment of the invention the cation comprises one or more chosen from the group alkali metals.

An advantage of these metals is that they present an alternative to the group of heavy metals. The effect is that maintenance is less hazardous to be performed. Another advantage is the relative occurrence of the metals and therefore a wide variety in possible combinations with anions.

In a preferred embodiment of the invention the cation comprises one or more of lithium, sodium, potassium, rubidium and/or caesium.

In addition to the advantages and effects as described previously, this cation type further enhances the stability of the system.

According to an embodiment of the invention the redox reaction at the first electrode involves the redox couple chosen from the group 3Br⁻/Br₃⁻, 3I⁻/I₃⁻. The advantage of a redox couple is the possibility to perform a redox reaction and gain energy.

According to the invention, the redox reaction at the first electrode involves the redox couple 3Br⁻/Br₃⁻ and/or 3I⁻/I₃⁻.

The advantage of these specific redox couples is that these can act as anion donor and/or acceptor. The effect of this is the possibility to remove the anion exchange membrane. This results in a reduction of co-ion transport loss and therefore a possibility to increase the efficiency of the cell. This will reduce the cost and simplifies the maintenance of the cell.

Another advantage is the lack of metals used in the redox reaction at the first electrode. The effect is the lack of toxic metals.

A further advantage is the stability of these redox couples in a strong acid and/or a strong base. The pH range this redox couple can be applied to is therefore very broad.

In a preferred embodiment the redox couple at the second electrode can be decreased in oxidation state or increased in oxidation state to obtain an electrical potential difference between the first and second electrode.

The advantage of these redox couples is that these can participate in a redox reaction and are stable in the proposed solvents. The effect thereof is that these can participate in the redox reaction. For example, these can act as anion donor and/or acceptor. It is possible to remove the cation exchange membrane and reduce the loss of co-ion transport at the side of the first electrode. Therefore, the efficiency of the system will further increase, even less maintenance needs to be performed, and costs will be reduced. In order to do so, the anion is retrieved from a salt, wherein the cation is preferably chosen from the group as mentioned before.

According to the present invention, the redox couple at the first electrode and second electrode are the same.

The advantage of having the same redox couple at both electrodes is that the chemical gradient is similar at both electrodes. The effect thereof is less or no diffusion of chemicals through the bipolar membrane.

According to an embodiment of the invention further comprises the step of stacking a number of cells wherein the energy charge and discharge step comprise the charge or discharge of a bipolar plate.

Stacking multiple cells occurs by placing two electrodes on opposite sides of the stack, one from each consecutive cell and opposite of each other in performed reaction (oxidation versus reduction and reduction versus oxidation).

Stacking the different cells results in a repetition of bipolar membrane, cation exchange membrane, bipolar plate or bipolar membrane, bipolar plate. The advantage of stacking the cells is the increase in storage capacity. As a result a pH gradient system with such a configuration is commercially more interesting.

Another advantage of a stack of cells is the reduction in space compared to single cells, therefore less space is required to obtain similar efficiency.

Yet another advantage is the reduction of connections as fewer electrodes are required compared to multiple single cells. The effect of this configuration is the reduction in maintenance and thus less costs to operate the system.

According to an embodiment of the invention the electrode is an activated carbon electrode, and wherein the activated carbon electrode is preferably a slurry electrode or a porous electrode.

An advantage of capacitive electrodes and/or capacitive slurries as reversible electrodes is that these electrodes can adsorb halogenide ions, for example fluoride, chloride, bromide and iodide. The effect of this type of electrons is that the cell is compatible with a wide variety of anions.

A further advantage of using capacitive electrodes is the lack of a redox couple. As a result this will open up a broad spectrum of anions and cations which can be used at the capacitive electrodes.

The anion(s) can be chosen from the following, but not limiting, group: fluoride (F⁻), chloride (Cl⁻), bromide (Br⁻), iodide (I⁻), carbonate (CO₃²⁻), hydrogencarbonate (HCO₃⁻), formiate (HCOO⁻), acetate (CH₃COO⁻), methanesulfonate (CH₃SO₃⁻), dihydrogenphosphate (H₂PO₄⁻), monohydrogenphosphate (HPO₄²⁻), phosphate (PO₄³⁻), perchlorate (ClO₄⁻), sulphate (SO₄²⁻), hydrogensulphate (HSO₄⁻), sulphite (SO₃²⁻), hydrogen sulphite (HSO₃⁻, nitrate (NO₃⁻), nitrite (NO₂⁻), hexafluorophosphate (PF₆⁻), tetrafluoroborate (BF₄⁻), permanganate (MnO₄⁻), citrate³⁻, monohydrogencitrate² , dihydrogencitrate⁻, oxalate²⁻, hydrogenoxalate⁻, selenate (SeO₄²⁻), hydrogenselenate (SeO₄⁻), selenite (SeO₃²⁻), hydrogenselenite (HSeO₃⁻), molybdate (MoO₄²⁻), hydrogenmolybdate (HMoO₄⁻), arsenite (AsO₃³⁻), hydrogenarsenite (HAsO₃²⁻), dihydrogenarsenite (H₂AsO₃⁻), arsenate (AsO₄³⁻), hydrogenarsenate (HAsO₄²⁻), dihydrogenarsenate (H₂AsO₄⁻), chromate (CrO₄²⁻), hydrogenchromate (HCrO₄⁻), isocyanate (OCN⁻), lactate⁻, orthosilicate (SiO₄⁴⁻).

The cation(s) can be chosen from the following, but not limiting, group: Li⁺, Na⁺, K⁺, Rb⁺, Cs⁺, Mg²⁺, Ca²⁺, Ba²⁺, Al³⁺, Mn²⁺, V²⁺, V³⁺, VO²⁺, VO²⁺, Pb²⁺, Ni²⁺.

According to an embodiment of the invention in use the pH at the first electrode is pH < 2.

In a further preferred embodiment the acidity level at the first electrode is pH < 2 and the acidity level at the second electrode is pH > 10.

The acidity level can be obtained using an acidic solution. The acid is dissolved in a solvent, for example water, to obtain an aqueous solution. The used acid(s) can be chosen from the following, but not limiting, group: selenic acid (H₂SeO₄), sulfuric acid (H₂SO₄), hydroiodic acid (HI), hydrobromic acid (HBr), hydrochloric acid (HCl), nitric acid (HNO₃), phosphoric acid (H₃PO₄), arsenic acid (H₃AsO₄), selenous acid (H₂SeO₃), chromic acid (H₂CrO₄), hydroxycitric acid, hydrofluoric acid (HF), nitrous acid (HNO₂), isocyanic acid, formic acid, hydroselenic acid (H₂Se), molybdic acid (H₂MoO₄), lactate acid, acetic acid, carbonic acid (H₂CO₃), hydrosulfuric acid (H₂S), arsenous acid (H₃AsO₃), boric acid (H₃BO₃), silicic acid (H₄SiO₄).

The basicity level can be obtained using a basic solution. The base is dissolved in a solvent, for example water, to obtain an aqueous solution. The used base(s) can be chosen from the following, but not limiting, group: Ba(OH)₂, Sr(OH)₂, NaOH, KOH, Na₂SIO₃, Ca(OH)₂, Na₃PO₄, K₂CO₃, Na₂CO₃, NH₄OH, Mg(OH)₂, CaCO₃, Fe(OH)₂, Cd(OH)₂, Na₂B₄O₇, Co(OH)₂, Zn(OH)₂, Ni(OH)₂, KAcetate, NaAcetate, KHCO₃, NaHCO₃, Be(OH)₂, Cu(OH)₂, Pb(OH)₂, Cr(OH)₂, Hg(OH)₂.

Preferably the reagents used performing the various reactions in the cell are stable at the pH present at the different compartments. This is important to be able to create a reusable system. For example, the base can be in a compartment or in a separate tank.

In a further embodiment the redox couple at one of the electrodes is dissolved at pH < 7 and at the counter electrode at pH > 7.

According to an embodiment of the invention the method further comprises the step of providing a catalyst.

The advantage of providing a catalyst is the improvement of the dissociation and/or combination of water. This results in an increase in efficiency of the cell. The catalyst can be placed within the bipolar membrane and/or dissolved in the compartment with the first electrode and/or dissolved in the compartment between the bipolar membrane and cation exchange membrane and/or compartment with the first electrode.

According to a presently preferred embodiment of the invention wherein the catalyst is located within the bipolar membrane and/or is chosen from, but not limited to one of the group: palygorskite, AgCl, Cr(OH)₃, Fe(OH)₂/Fe(OH)₃, ZrO₂, tertiary amines, Sn ion, Ru ion, phosphoric acid groups, carboxylic acid groups, hydrated silicon oxide.

The advantage of the catalyst is the possible in situ formation. A further advantage is the affinity with dissociation and/or combination with water. Another advantage is the availability of the catalyst.

The invention also relates to a stack for storage of energy using a pH gradient system, the stack comprising cells which further comprises a bipolar membrane and are separated by a bipolar plate.

The stack provides similar advantages and effects as those described for the method. More specifically, the stack enables an efficient and effective storage of energy, wherein the cell is a container or a flow device. The flow device contains a one or more devices to move the liquid. These devices could be, but are not limited to, pumps, conununicating vessels, pressure.
In further embodiments the stack of cells further comprises a cation exchange membrane.
This enables providing a stack of alternately provided cation exchange membranes and bipolar membrane.

The invention also relates to a system for storage of energy using a pH gradient system, comprising:
- a stack according to an embodiment of the invention; and
- first and second electrodes.

The system provided the same advantages and effects as those described for the method and/or the stack.

Further advantages, features and details of the invention are elucidated on the basis of preferred embodiments thereof, wherein reference is made to the accompanying drawings, in which:
- Figure 1 shows a first embodiment of the pH gradient system with two tanks in the charge state and involving a cation exchange membrane;
- Figure 2 shows a cell of the pH gradient system of figure 1 in the discharge state;
- Figure 3 shows a stack of cells of a pH gradient system of figures 1 and 2 in the bipolar configuration in the charge state wherein each cell includes a cation exchange membrane;
- Figure 4 shows a second embodiment of cell of a pH gradient system in an alternative configuration with two tanks in the charge state;
- Figure 5 shows the cell of the pH gradient system of figure 4 in the discharge state;
- Figure 6 shows a stack of cells of the pH gradient system of figures 4 and 5 in the bipolar configuration in the charge state.
- Figure 7 shows a third embodiment of cell of a pH gradient system in a further alternative configuration in the charge state with two tanks and a cation exchange membrane and activated carbon electrodes;
- Figure 8 shows the cell of the pH gradient system of figure 7 in the discharge state and a cation exchange membrane and activated carbon electrodes; and
- Figure 9 shows a stack of cells of the pH gradient system of figures 7 and 8 in the bipolar configuration in the charge state wherein each cell with a cation exchange membrane and activated carbon electrodes.

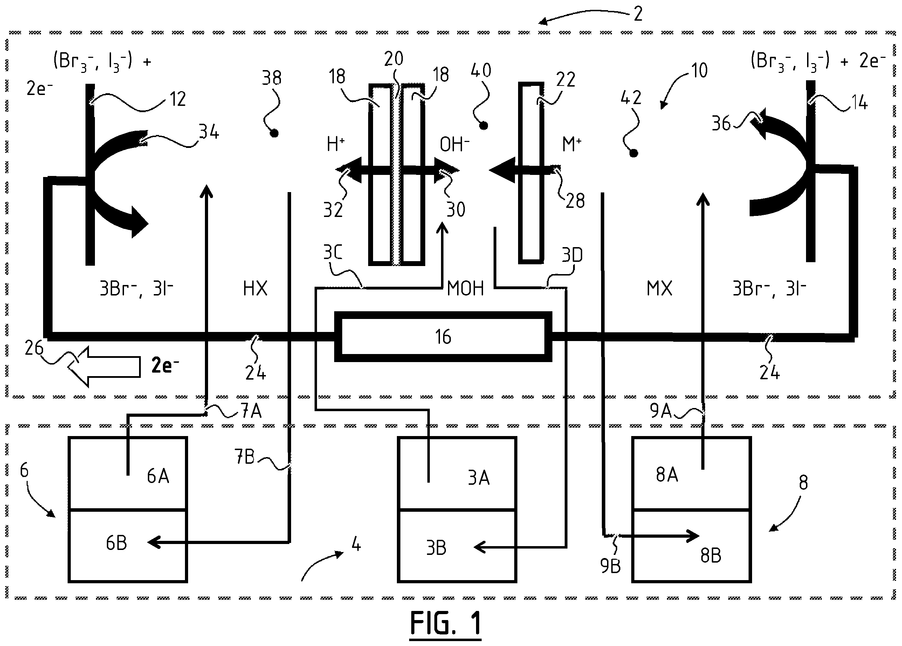

In a first illustrated embodiment of the invention, pH gradient system 2 (figures 1-3) performs storage of energy.

In an illustrated embodiment this starts with a pH gradient system 2 (figure 1) comprising cell 10 and tank unit 4. Tank unit 4 comprises tank 6 with fill part 6A and collection part 6B to fill and/or empty compartment 38 at first electrode 12 of cell 10. This is performed using inlet line 7A for filling compartment 38 and outlet line 7B to empty compartment 38. Tank unit 4 also comprises tank 3A and B, with fill part 3A and collection part 3B to fill and/or empty compartment 40 of cell 10. This is performed using inlet line 3C for filling compartment 40 and outlet line 3D to empty compartment 40. Tank unit 4 also comprises tank 8 with fill part 8A and collection part 8B to fill and/or empty compartment 42 at first electrode 14 of cell 10. This is performed using inlet line 9A for filling compartment 42 and outlet line 9B to empty compartment 42. Cell 10 is in the charging state and comprises first electrode 12 in compartment 38 separated to further compartments by bipolar membrane 18. Cell 10 further comprises bipolar membrane 18 which optionally contains catalyst 20, wherein bipolar membrane 18 encloses compartment 40 together with cation exchange membrane 22 in order to separate compartment 42 from bipolar membrane 18. Cell 10 further comprises second electrode 14 in compartment 42. First electrode 12 and second electrode 14 are connected via cable 24 and power supply 16 in order to form a circuit and move electrons 26. This allows performing reduction reaction 34 at first electrode 12 and oxidation reaction 36 at second electrode 14 in the presence of a redox couple. The reactions at first electrode 12 and second electrode 14 will result in the dissociation 30, 32 of water into H⁺ 32 and OH⁻ 30. To balance the charge in compartment 40 a cation will diffuse 28 through cation exchange membrane 22 to compartment 40.

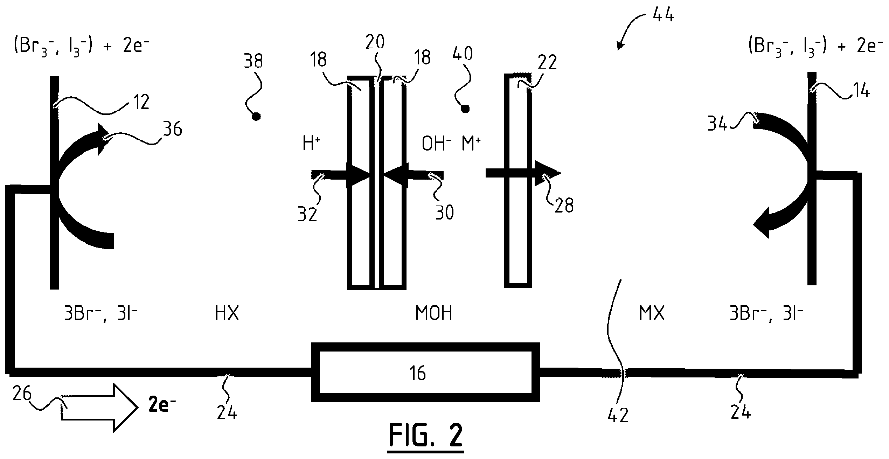

It will be understood that the tanks of the embodiment described in figure 1 could be applied to the embodiments described in figures 2-9.

In another illustrated embodiment, cell 44 is in the discharge state (figure 2). Cell 44 comprises first electrode 12 in compartment 38 separated to further compartments by bipolar membrane 18. Cell 44 further comprises bipolar membrane 18 which optionally contains catalyst 20, wherein bipolar membrane 18 encloses compartment 40 together with cation exchange membrane 22 in order to separate compartment 42 from bipolar membrane 18. Cell 44 further comprises second electrode 14 in compartment 42. First electrode 12 and second electrode 14 are connected via cable 24 and load 46 in order to form a circuit and move electrons 26. This allows performing oxidation reaction 36 at first electrode 12 and reduction reaction 34 at second electrode 14 in the presence of a redox couple. The reactions at first electrode 12 and second electrode 14 will result in the association of 30 and 32 into water. To balance the charge in compartment 42 a cation will diffuse 28 through cation exchange membrane 22 to compartment 42. It will be understood that cable 24 in this and other embodiments is not limited to a cable, it could also be a line, wire or any kind of connection between electrode 12 and electrode 14 which can transport electrons, and other suitable means.

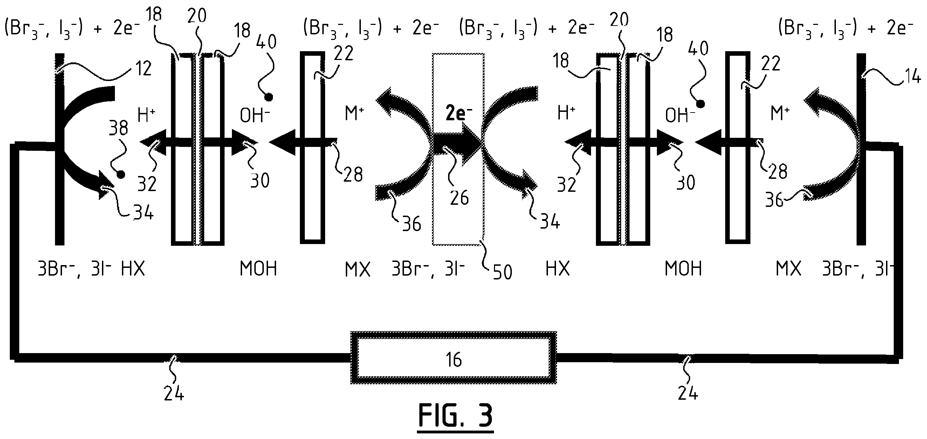

In another illustrated embodiment, stacked cells 48 in the charge position are shown (figure 3). The design of the cells present in the stack are similar to cell 10 explained in figure 1. The difference is that two cells are connected via bipolar plate 50. One end cell contains first electrode 12 and another end cell contains second electrode 14.

The different redox reactions which could be performed in the various embodiments are a reduction reaction and an oxidation reaction which follows the general formulas:

X₃⁻ + 2 e⁻ → 3 X⁻ (reduction reaction)

3 X⁻ → X₃⁻ + 2 e⁻ (oxidation reaction)

The anion is the limiting element in this redox reaction. According to the present invention elements for X are iodine or bromine.

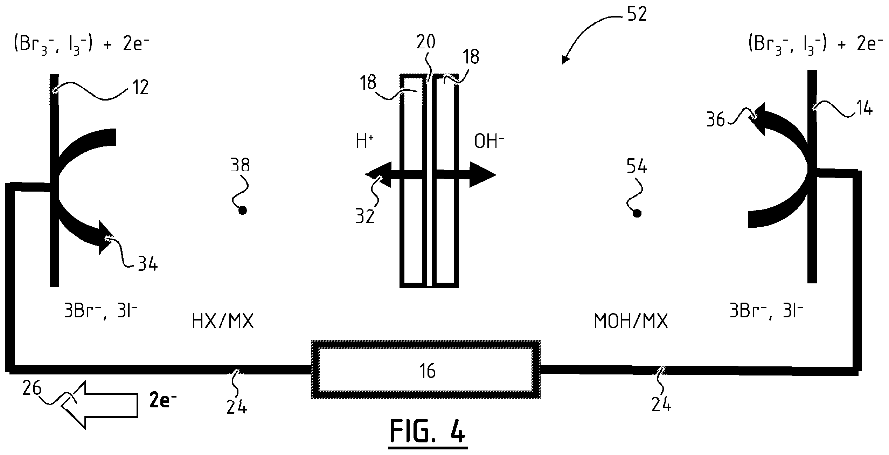

In a second illustrated embodiment of the invention, pH gradient system 2 (figures 4-6) performs storage of energy. In this second illustrated embodiment, cell 52 is in the charging state (figure 4). Cell 52 comprises first electrode 12 in compartment 38 separated to further compartments by bipolar membrane 18. Cell 52 further comprises bipolar membrane 18 which optionally contains catalyst 20, wherein bipolar membrane 18 separates compartment 38 and compartment 54. Cell 52 further comprises second electrode 14 in compartment 54. First electrode 12 and second electrode 14 are connected via cable 24 and power supply 16 in order to form a circuit and move electrons 26. This allows performing reduction reaction 34 at first electrode 12 and oxidation reaction 36 at second electrode 14 in the presence of a redox couple. The reactions at first electrode 12 and second electrode 14 will result in the dissociation 30, 32 of water into H⁺ 32 and OH⁻ 30.

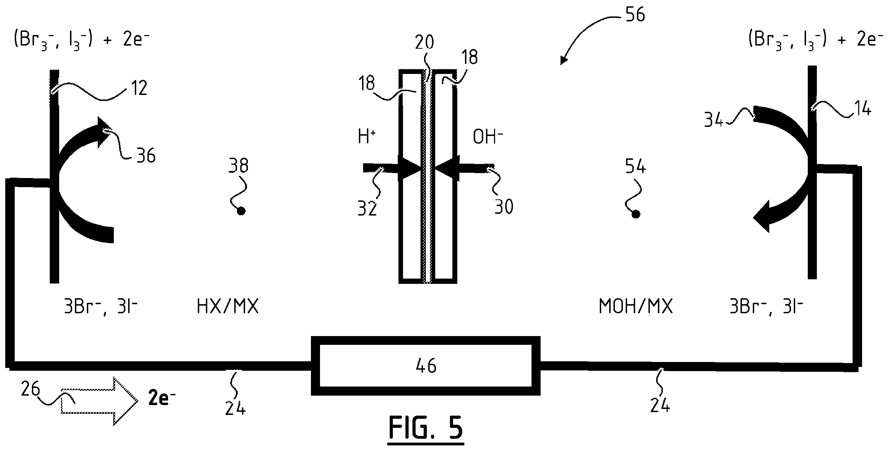

In another illustrated embodiment, cell 56 is in the discharging state (figure 5). Cell 56 comprises first electrode 12 in compartment 38 separated to further compartments by bipolar membrane 18. Cell 56 further comprises bipolar membrane 18 which optionally contains catalyst 20, wherein bipolar membrane 18 separates compartment 38 and compartment 54. Cell 56 further comprises second electrode 14 in compartment 54. First electrode 12 and second electrode 14 are connected via cable 24 and load 46 in order to form a circuit and move electrons 26. This allows performing oxidation reaction 36 at first electrode 12 and reduction reaction 34 at second electrode 14 in the presence of a redox couple. The reactions at first electrode 12 and second electrode 14 will result in the association of H⁺ 32 and OH⁻ 30 into water.

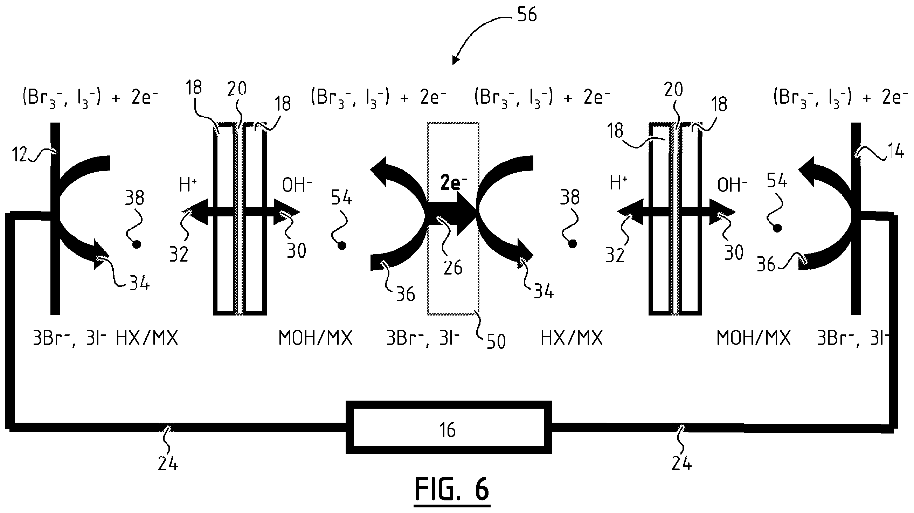

In another illustrated embodiment, stacked cells 56 in the charge position are shown (figure 6). The design of the cells present in the stack are similar to cell 52 explained in figure 4. The difference is that two cells are connected via bipolar plate 50. One end cell contains first electrode 12 and another end cell contains second electrode 14.

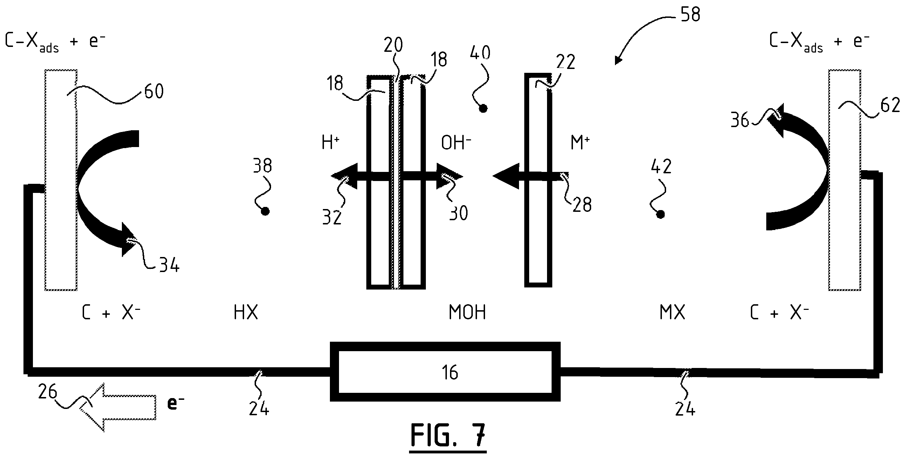

In a third illustrated embodiment of the invention, pH gradient system 2 (figures 7-9) performs storage of energy.

In another third illustrated embodiment, cell 58 is in the charging state (figure 7) and comprises first activated carbon electrode 60 in compartment 38 separated to further compartments by bipolar membrane 18. Cell 58 further comprises bipolar membrane 18 which optionally contains catalyst 20, wherein bipolar membrane 18 encloses compartment 40 together with cation exchange membrane 22 in order to separate compartment 42 from bipolar membrane 18. Cell 58 further comprises second activated carbon electrode 62 in compartment 42. First activated carbon electrode 60 and second activated carbon electrode 62 are connected via cable 24 and power supply 16 in order to form a circuit and move electrons 26. This allows performing desorption reaction 34 at first activated carbon electrode 60 and adsorption reaction 36 at second activated carbon electrode 62. Therefore, desorption of anions at electrode 60 and adsorption of anions at electrode 62. The reactions at first activated carbon electrode 60 and second activated carbon electrode 62 will result in the dissociation 30, 32 of water into H⁺ 32 and OH⁻ 30. To balance the charge in compartment 40 a cation 28 will diffuse through cation exchange membrane 22 to compartment 40.

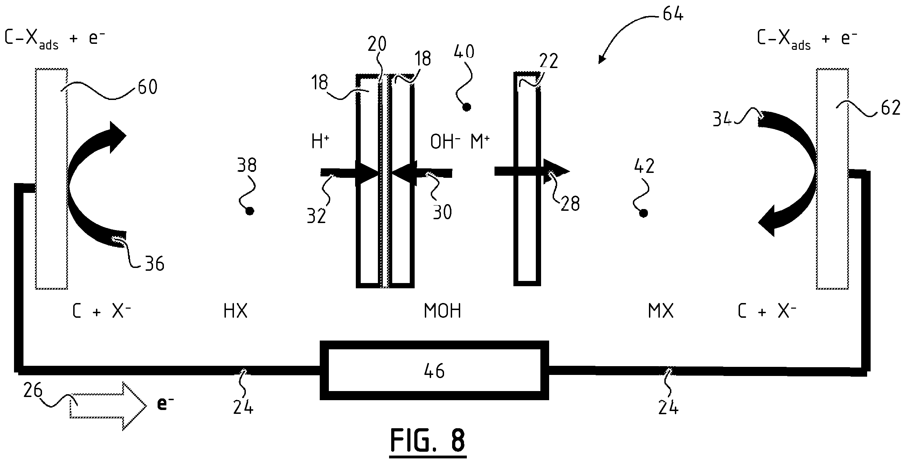

In another illustrated embodiment, cell 64 is in the discharging (figure 8) state and comprises first electrode 60 in compartment 38 separated to further compartments by bipolar membrane 18. Cell 58 further comprises bipolar membrane 18 which optionally contains catalyst 20, wherein bipolar membrane 18 encloses compartment 40 together with cation exchange membrane 22 in order to separate compartment 42 from bipolar membrane 18. Cell 64 further comprises second electrode 62 in compartment 42. First activated carbon electrode 60 and second activated carbon electrode 62 are connected via cable 24 and resistor 46 in order to form a circuit and move electrons 26. This allows performing adsorption reaction 36 at first activated carbon electrode 60 and desorption reaction 34 at second activated carbon electrode 62. The reactions at first activated carbon electrode 60 and second activated carbon electrode 62 will result in the association 30, 32 of water. To balance the charge in compartment 40 a cation 28 will diffuse through cation exchange membrane 22 to compartment 42. It will be understood that cable 24 is not limited to a cable, it could also be a line, wire or any kind of connection between activated carbon electrode 60 and activated carbon electrode 62.

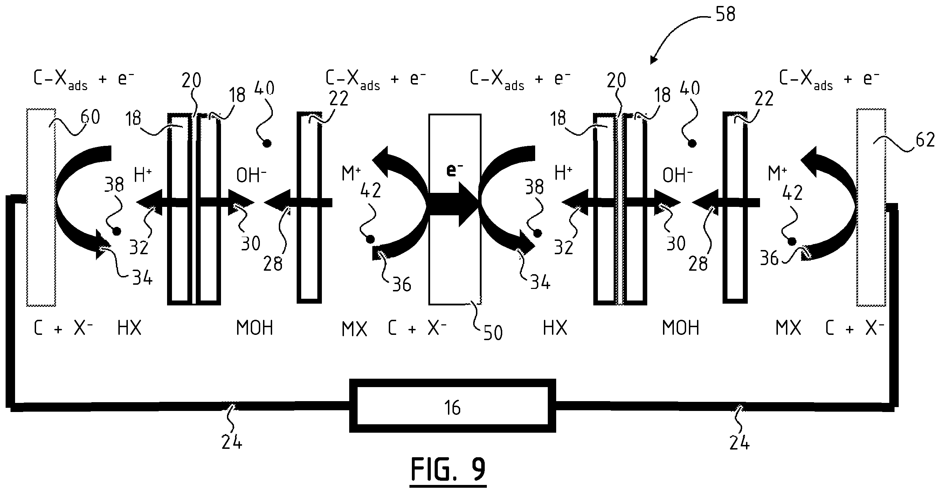

In another illustrated embodiment, stacked cells 66 in the charge position are shown (figure 9). The design of the cells present in the stack are similar to cell 58 explained in figure 7. The difference is that two cells are connected via bipolar plate 50. One end cell contains first activated carbon electrode 60 and another end cell contains second activated carbon electrode 62.

The features of the different embodiments are not limited to those embodiments and are interchangeably. For example, the activated carbon electrodes described in figures 7-9 can also be applied to the embodiment of figures 4-6.

In a further embodiment the cell was charged with a redox couple consisting of Ag/AgI, Ag/AgCl, Ag/AgBr, Ag/AgF, not forming part of the present invention. This redox couple has the same advantages and effects of the previously described redox couples. This redox couple can be applied to the embodiments previously described by the Figures 1-6.

Experiments have been performed with pH gradient system 2 using iodide. The reaction was performed using a stack of cells. The fluids are pumped through the different compartments of the cell(s).

In the charge state a reduction reaction is performed at electrode 12, forming iodide starting from triiodide. The reaction performed at electrode 14 in the charge state is an oxidation reaction, forming triiodide from iodide.

I₃⁻ + 2 e⁻ → 3 I⁻ (reduction reaction at electrode 12)

3 I⁻ → I₃⁻ + 2 e⁻ (oxidation reaction at electrode 14)

In the discharge state an oxidation reaction is performed at electrode 12, forming triiodide starting from iodide. The reaction performed at electrode 14 in the discharge state is a reduction reaction, forming iodide from triiodide.

I₃⁻ + 2 e⁻ → 3 I⁻ (reduction reaction at electrode 14)

3 I⁻ → I₃⁻ + 2 e⁻ (oxidation reaction at electrode 12)

This experiment shows the embodiment functionally works and could be used for storage of energy. This could for example enable household application in times of energy surplus.

Optionally, a catalyst and/or other redox couple can be applied to this system and/or in accordance with the method of the invention.

Examples of possible redox couple combinations, but not limited to, are:

| Example | First electrode | Second electrode |
|---|---|---|
| 1 | Fe²⁺ = Fe³⁺+ e⁻ | I₃⁻ + 2e⁻ = 3I⁻ |
| 2 | 3I⁻ = I₃⁻ + 2e⁻ | I₃⁻ + 2e⁻ = 3I⁻ |
| 3 | 3Br⁻ = Br₃⁻ + 2e⁻ | 3Br⁻ = Br₃⁻ + 2e⁻ |
| 4 | Ru²⁺ = Ru³⁺ + e⁻ | I₃⁻ + 2e⁻ = 3I⁻ |
| 5 | Sn²⁺ = Sn⁴⁺ + 2e⁻ | I₃⁻ + 2e⁻ = 3I⁻ |
| 6 | V²⁺ = V³⁺ + e⁻ | I₃⁻ + 2e⁻ = 3I⁻ |
| 7 | Pb +SO₄²⁻ = PbSO₄ + 2e⁻ | I₃⁻ + 2e⁻ = 3I⁻ |
| 8 | Zn = Zn²⁺+ 2e⁻ | I₃⁻ + 2e⁻ = 3I⁻ |
| 9 | Fe²⁺ = Fe³⁺+ e⁻ | 3Br⁻ = Br₃⁻ + 2e⁻ |
| 10 | 3I⁻ = I₃⁻ + 2e⁻ | 3Br⁻ = Br₃⁻ + 2e⁻ |
| 11 | Ru²⁺ = Ru³⁺ + e⁻ | 3Br⁻ = Br₃⁻ + 2e⁻ |
| 12 | Sn²⁺ = Sn⁴⁺ + 2e⁻ | 3Br⁻ = Br₃⁻ + 2e⁻ |
| 13 | V²⁺ = V³⁺ + e⁻ | 3Br⁻ = Br₃⁻ + 2e⁻ |
| 14 | Pb +SO₄²⁻ = PbSO₄ + 2e⁻ | 3Br⁻ = Br₃⁻ + 2e⁻ |
| 15 | Zn = Zn²⁺+ 2e⁻ | 3Br⁻ = Br₃⁻ + 2e⁻ |

Only examples 2, 3 and 10 in the table are according to the present invention. The present invention is by no means limited to the above described preferred embodiments thereof. The rights sought are defined by the following claims, within the scope of which many modifications can be envisaged.

## Claims

1. Method for storage of energy using a pH gradient system, the method comprising the steps of:
- providing the pH gradient system comprising:
- a cell (44) with at least two compartments separated with a bipolar membrane (18);
- a first electrode (12) in a first of the at least two compartment: (38); and
- a second electrode (14) in the other of the at least two compartments (42, 54);
- providing the at least one cell with a solvent;
- loading at least one of the at least two compartments with an electrolyte;
- performing a charging step of the pH gradient system, which performs a reduction reaction in presence of a redox couple and a water dissociation reaction in the bipolar membrane (18);
- performing a discharging step of the pH gradient system, which performs an oxidation reaction in the presence of a redox couple and a water formation reaction in the bipolar membrane (18); and
wherein the redox couple at the first electrode (12) can be decreased in oxidation state or increased in oxidation state to obtain an electrical potential difference between the first and second electrode wherein the redox couple at the first electrode (12) is chosen from the group: 3I⁻/I₃⁻, 3Br⁻/Br₃⁻, wherein the redox couple acts as anion donor and/or acceptor, and wherein the redox couple at the first electrode (12) and second electrode (14) are the same.

2. Method according to claim 1, wherein the solvent is one or more chosen from a group of: acetonitrile, butanol, ethanol, ethyl acetate, methanol, propanol, tetrahydrofuran, water or mixtures thereof.

3. Method according to any of the preceding claims, wherein the redox couple at the second electrode acts as anion donor and/or acceptor.

4. Method according to any of the preceding claims, further comprises the step of stacking wherein the energy charge and discharge step comprise the charge or discharge of a bipolar plate.

5. Method according to any of the preceding claims, wherein the first electrode (60) is an activated carbon electrode, wherein the activated carbon electrode (60) is a slurry electrode or a porous electrode.

6. Method according to claim 9, wherein an anion at the first activated carbon electrode is chosen from the group bromide (Br⁻) and iodide, and wherein a cation at the second activated carbon electrode is chosen from the group Li⁺, Na⁺, K⁺, Rb⁺, Cs⁺, Mg²⁺, Ca²⁺, Ba²⁺, Al³⁺, Mn²⁺, V²⁺, V³⁺, VO²⁺, VO₂⁺, Pb²⁺, Ni²⁺.

7. Method according to any of the preceding claims, further comprising a catalyst, wherein the catalyst is chosen from the group: palygorskite, AgCl, Cr(OH)₃, Fe(OH)₂/Fe(OH)₃, ZrO₂, tertiary amines, Sn ion, Ru ion, phosphoric acid groups, carboxylic acid groups, hydrated silicon oxide, wherein the catalyst located within the bipolar membrane preferably is Fe(OH)₂/Fe(OH)₃.

8. Stack (56) for storage of energy using a pH gradient system according to claim 1, the stack comprising cells (10, 48) which further comprises a bipolar membrane (18) and are separated by a bipolar plate (50), wherein the stack is configured to perform the method according to any of the preceding claims.

9. Stack according to claim 8, further comprising a cation exchange membrane (22).

10. System for storage of energy using a pH gradient system (2), comprising:
- stack according to claim 8 or 9. 2.

## Patentansprüche

1. Verfahren für eine Speicherung von Energie unter Verwendung eines pH-Gradienten-Systems, das Verfahren umfassend die Schritte:
- Bereitstellen des pH-Gradienten-Systems, umfassend:
- eine Zelle (44) mit mindestens zwei Kammern, die mit einer bipolaren Membran (18) getrennt sind;
- eine erste Elektrode (12) in einer ersten der mindestens zwei Kammern (38); und
- eine zweite Elektrode (14) in der anderen der mindestens zwei Kammern (42, 54)
- Versehen der mindestens einen Zelle mit einem Lösungsmittel;
- Beladen mindestens einer der mindestens zwei Kammern mit einem Elektrolyten;
- Durchführen eines Ladeschritts des pH-Gradienten-Systems, der eine Reduktionsreaktion in Gegenwart eines Redoxpaares und eine Wasserdissoziationsreaktion in der bipolaren Membran (18) durchführt;
- Durchführen eines Entladeschritts des pH-Gradienten-Systems, der eine Oxidationsreaktion in der Gegenwart eines Redoxpaares und eine Wasserausbildungsreaktion in der bipolaren Membran (18) durchführt; und
wobei das Redoxpaar an der ersten Elektrode (12) in einem Oxidationszustand verringert oder in einem Oxidationszustand erhöht werden kann, um eine elektrische Potentialdifferenz zwischen der ersten und der zweiten Elektrode zu erhalten
wobei das Redoxpaar an der ersten Elektrode (12) aus der Gruppe ausgewählt ist: 3I⁻/I₃⁻, 3Br⁻/Br₃⁻, wobei das Redoxpaar als ein Anionendonor und/oder -akzeptor wirkt, und wobei das Redoxpaar an der ersten Elektrode (12) und der zweiten Elektrode (14) dasselbe ist.

2. Verfahren nach Anspruch 1, wobei das Lösungsmittel eines oder mehrere ist, ausgewählt aus einer Gruppe von: Acetonitril, Butanol, Ethanol, Ethylacetat, Methanol, Propanol, Tetrahydrofuran, Wasser oder Mischungen davon.

3. Verfahren nach einem der vorstehenden Ansprüche, wobei das Redoxpaar an der zweiten Elektrode als Anionendonor und/oder -akzeptor wirkt.

4. Verfahren nach einem der vorstehenden Ansprüche, das ferner den Schritt eines Stapelns umfasst, wobei der Energielade- und -entladeschritt das Laden oder Entladen einer Bipolarplatte umfassen.

5. Verfahren nach einem der vorstehenden Ansprüche, wobei die erste Elektrode (60) eine Aktivkohleelektrode ist, wobei die Aktivkohleelektrode (60) eine Aufschlämmungselektrode oder eine poröse Elektrode ist.

6. Verfahren nach Anspruch 9, wobei ein Anion an der ersten Aktivkohleelektrode aus der Gruppe Bromid (Br) und lodid ausgewählt ist, und wobei ein Kation an der zweiten Aktivkohleelektrode aus der Gruppe Li⁺, Na⁺, K⁺, Rb⁺, Cs⁺, Mg²⁺, Ca²⁺, Ba²⁺, Al³⁺, Mn²⁺, V²⁺, V³⁺, VO²⁺, VO²⁺, Pb²⁺, Ni²⁺ ausgewählt ist.

7. Verfahren nach einem der vorstehenden Ansprüche, ferner umfassend einen Katalysator, wobei der Katalysator aus der Gruppe ausgewählt ist:
Palygorskit, AgCl, Cr(OH)₃, Fe(OH)₂/Fe(OH)₃, ZrO₂, tertiäre Amine, Sn-Ion, Ru-Ion, Phosphorsäuregruppen, Carbonsäuregruppen, hydratisiertes Siliciumoxid, wobei der Katalysator, der sich innerhalb der bipolaren Membran befindet, vorzugsweise Fe(OH)₂/Fe(OH)₃ ist.

8. Stapel (56) für eine Speicherung von Energie unter Verwendung eines pH-Gradienten-Systems nach Anspruch 1, der Stapel umfassend Zellen (10, 48), die ferner eine bipolare Membran (18) umfassen und durch eine Bipolarplatte (50) getrennt sind, wobei der Stapel konfiguriert ist, das Verfahren nach einem der vorstehenden Ansprüche durchzuführen.

9. Stapel nach Anspruch 8, ferner umfassend eine Kationenaustauschmembran (22).

10. System für eine Speicherung von Energie unter Verwendung eines pH-Gradienten-Systems (2), umfassend:
- Stapel nach Anspruch 8 oder 9.

## Revendications

1. Procédé pour le stockage d'énergie à l'aide d'un système à gradient de pH, le procédé comprenant les étapes consistant à :
- fournir le système à gradient de pH comprenant :
- une cellule (44) avec au moins deux compartiments séparés par une membrane bipolaire (18) ;
- une première électrode (12) dans un premier compartiment parmi les au moins deux compartiments (38) ; et
- une seconde électrode (14) dans l'autre compartiment parmi les au moins deux compartiments (42, 54) ;
- fournir un solvant à l'au moins une cellule ;
- charger au moins l'un parmi les au moins deux compartiments avec un électrolyte ;
- réaliser une étape de charge du système à gradient de pH, qui réalise une réaction de réduction en présence d'un couple rédox et une réaction de dissociation de l'eau dans la membrane bipolaire (18) ;
- réaliser une étape de décharge du système à gradient de pH, qui réalise une réaction d'oxydation en présence d'un couple rédox et une réaction de formation d'eau dans la membrane bipolaire (18) ; et
dans lequel le couple rédox au niveau de la première électrode (12) peut être diminué dans l'état d'oxydation ou augmenté dans l'état d'oxydation pour obtenir une différence de potentiel électrique entre la première et la seconde électrode
dans lequel le couple rédox au niveau de la première électrode (12) est choisi dans le groupe comprenant : 3I⁻/I₃⁻, 3Br⁻/Br₃⁻, dans lequel le couple rédox agit comme donneur et/ou accepteur d'anions, et dans lequel les couples rédox au niveau de la première électrode (12) et au niveau de la seconde électrode (14) sont les mêmes.

2. Procédé selon la revendication 1, dans lequel le solvant est un ou plusieurs solvants choisis dans un groupe constitué de : acétonitrile, butanol, éthanol, acétate d'éthyle, méthanol, propanol, tétrahydrofurane, eau ou leurs mélanges.

3. Procédé selon l'une quelconque des revendications précédentes, dans lequel le couple rédox au niveau de la seconde électrode agit comme donneur et/ou accepteur d'anions.

4. Procédé selon l'une quelconque des revendications précédentes, comprenant en outre l'étape d'empilement, dans lequel l'étape de charge et de décharge d'énergie comprend la charge ou la décharge d'une plaque bipolaire.

5. Procédé selon l'une quelconque des revendications précédentes, dans lequel la première électrode (60) est une électrode à charbon actif, dans lequel l'électrode à charbon actif (60) est une électrode à suspension ou une électrode poreuse.

6. Procédé selon la revendication 9, dans lequel un anion au niveau de la première électrode à charbon actif est choisi dans le groupe comprenant bromure (Br) et iodure, et dans lequel un cation au niveau de la seconde électrode de charbon actif est choisi dans le groupe comprenant Li⁺, Na⁺, K⁺, Rb⁺, Cs⁺, Mg²⁺, Ca²⁺, Ba²⁺, Al³⁺, Mn²⁺, V²⁺, V³⁺, VO²⁺, VO²⁺, Pb²⁺, Ni²⁺.

7. Procédé selon l'une quelconque des revendications précédentes, comprenant en outre un catalyseur, dans lequel le catalyseur est choisi dans le groupe comprenant : palygorskite, AgCl, Cr(OH)₃, Fe(OH)₂/Fe(OH)₃, ZrO₂, amines tertiaires, ion Sn, ion Ru, groupes acide phosphorique, groupes acide carboxylique, oxyde de silicium hydraté, dans lequel le catalyseur situé à l'intérieur de la membrane bipolaire est de préférence Fe(OH)₂/Fe(OH)₃.

8. Empilement (56) pour le stockage d'énergie à l'aide d'un système à gradient de pH selon la revendication 1, l'empilement comprenant des cellules (10, 48) qui comprennent en outre une membrane bipolaire (18) et sont séparées par une plaque bipolaire (50), dans lequel l'empilement est configuré pour mettre en œuvre le procédé selon l'une quelconque des revendications précédentes.

9. Empilement selon la revendication 8, comprenant en outre une membrane échangeuse de cations (22).

10. Système pour le stockage d'énergie à l'aide d'un système à gradient de pH (2), comprenant :
- un empilement selon la revendication 8 ou 9.
